# EUROPEAN PATENT SPECIFICATION

(11) **EP 1 876 480 B1**
(45) Date of publication and mention of the grant of the patent: **01.05.2013**
(21) Application number: 07252113.1
(22) Date of filing: 23.05.2007
(51) Int. Cl.: G02B 6/00, F21V 8/00

(54) **Backlight unit of a liquid crystal display device**
Rückbeleuchtungseinheit einer Flüssigkristallanzeigevorrichtung
Unité de rétroéclairage et dispositif d'affichage à cristaux liquides

(30) Priority: 04.07.2006 KR 20060062737
(43) Date of publication of application: 09.01.2008
(73) Proprietor: Samsung Display Co., Ltd., Gyeonggi-Do (KR)
(72) Inventor: Lee, Dong Ho c/o Legal & IP Team, Yongin-si, Gyeonggi-do (KR); Cho, Won Ki c/o Legal & IP Team, Yongin-si, Gyeonggi-do (KR); Han, Wan Soo c/o Legal & IP Team, Yongin-si, Gyeonggi-do (KR); Ko, Ho Seok c/o Legal & IP Team, Yongin-si, Gyeonggi-do (KR); Lee, Sang Hoon c/o Legal & IP Team, Yongin-si, Gyeonggi-do (KR); Jeong, Jong Hyo c/o Legal & IP Team, Yongin-si, Gyeonggi-do (KR); Eum, Hee Chan c/o Legal & IP Team, Yongin-si, Gyeonggi-do (KR)
(74) Representative: Mounteney, Simon James

(56) References cited:
- US-A- 5 779 337
- US-A- 6 164 791
- US-A1- 2003 034 445
- US-A1- 2005 135 116

## Description

### 1. Field of the Invention

The invention relates to a light guide member and a backlight unit including a light guide member. More particularly, the invention relates to a light guide member for guiding light traveling therein and providing uniformly distributed light, and a backlight unit employing such a light guide member.

### 2. Description of the Related Art

A light guide member may be employed, e.g., by an illumination device of a display device, to receive light from a light source of the illumination device, and to guide the received light so as to provide light having a uniform luminance distribution to a display panel of the display device. For example, a flat panel display device, e.g., a liquid crystal display (LCD), may include an illumination device, e.g., a backlight unit (BLU), which may include a light guide member.

There is a demand for improved display devices in, e.g., the information and communication industries. More particularly, e.g., higher resolution, lighter, thinner, and/or less power consuming display devices are desired. One possible approach for developing such improved display devices is to provide thinner, lighter BLUs and/or improved light guide members capable of providing light having a more uniform luminance distribution.

For example, one type of flat panel display that is widely used today is thin film transistor-liquid crystal displays (TFT-LCDs). Such TFT-LCDs may include an LCD panel in which liquid crystal is provided between two substrates, a BLU as an illumination device positioned in a lower portion of the LCD panel, and an LCD drive IC (LDI) for driving the liquid crystal display panel. The BLU unit may include, e.g., a light source, a light guide member, and an optical sheet including a diffusion sheet and a prism sheet.

The light source may supply non-uniformly distributed linear light to the light guide member. Generally, the purpose of a light guide member is to modify the non-uniformly distributed linear light and output planar light having a uniform optical distribution. However, conventional light guide members fall short of outputting uniformly distributed linear light. For example, portions of the light guide member arranged between, and in close proximity to, light sources of the illumination device may provide less light, i.e., appear darker, than portions of the light guide member arranged substantially along a zero-degree radiation angle of the respective light source.

More particularly, in general, as the radiation angle of light from a light source increases, light intensity decreases. The diffusion of light is also generally weak at a portion of a light guide member close to the light source. Thus, e.g., at portions of the light guide member receiving light from the light source via relatively larger radiation angles and/or beyond a radiation angle of the light, the intensity of light output from the light guide member may not have a uniform luminance distribution. As a result of such non-uniformity, a luminance distribution of light from the light guide member may include a bright line, bright area and/or dark area, close to the light source, i.e., a bright line/area effect. Such a bright line/area effect may be particularly prominent at portions of the light guide member that do not overlap with or are not aligned with light sources of a light source unit. When, light having a non-uniform luminance distribution is provided to a display device, image quality of the display device may be hindered.

In view of such shortcomings of the light guide member, a BLU employing such light guide members may include a plurality of optical sheets, e.g., a diffusion sheet and a prism sheet, in an attempt to provide light having a more uniformly distributed luminance to the display device. However, having to provide additional optical sheets may increase, e.g., the cost, weight and/or size of the BLU.

US 2003/034445 discloses a light guide including a light guide body having a light re-directing side positioned opposite from a light output side. The light guide includes a plurality of light extraction structures located adjacent the light re-directing side of the light guide body for reflecting light toward the light output side. The light extraction structures include elongated projections each having a plateau segment and first and second facets. The elongated projections are separated by lands that are recessed relative to the plateau segments. The first and second facets extend from the plateau segments to the lands.

US 2005/135116 discloses an illumination system includes a light guide for distributing light. Extraction structures are provided to uniformly extract light from the light guide. The structures extract more light out of the light guide when light is propagating in the light guide in a direction toward the light input area than when light is propagating in the light guide in a direction away from the light input area.

US 5779337 discloses a plane light source unit including a tubular light source, and a light guide. The light guide has a plurality of projections or grooves arrayed on the light emitting surface to extend parallel to each other along a longitudinal direction of the tubular light source so as to cause the light incident from the light incident face to emerge from the light emitting surface. The height or depth of each of the projections or grooves increases from the central portion to the two end portions in the longitudinal direction of the tubular light source.

US 6164791 discloses a backlight source device including a transparent light guiding plate, a diffusing piece on the transparent light guiding plate, a reflecting piece below the transparent light guiding plate and a lateral light source. Diffusing units are installed on either a front surface or a rear surface of the transparent light guiding plate. The light reflected on the diffusing units by the lateral light source becomes substantially uniform such that light and dark regions of a backlight source device can be avoided.

It is an object of the invention to provide a light guide member and a backlight unit including such a light guide member, which substantially overcome one or more of the problems due to limitations and disadvantages of the related art.

It is therefore a feature of embodiments of the invention to provide a light guide member capable of guiding light to output light having a more uniform luminance distribution relative to conventional light guide members.

It is therefore a separate feature of embodiments of the invention to provide a BLU employing only a prism sheet as an optical member.

It is therefore a separate feature of embodiments of the invention to provide a light guide member capable of guiding light to output light having a substantially uniform and/or entirely uniform luminous distribution.

It is therefore a separate feature of embodiments of the invention to provide a thinner and/or lighter BLU.

According to a first aspect of the invention, there is provided a light guide member as set out in Claim 1. Preferred features of this aspect are set out in Claims 2 to 12.
According to a second aspect of the invention, there is provided a back light unit as set out in Claim 13. Preferred features of this aspect are set out in Claims 14 to 16.

### BRIEF DESCRIPTION OF THE DRAWINGS

The above and other features and advantages of the invention will become more apparent to those of ordinary skill in the art by describing in detail exemplary embodiments thereof with reference to the attached drawings in which:

FIG. 1 illustrates an exploded perspective view of parts of an exemplary liquid crystal display device employing an embodiment of a backlight unit and a light guiding member according to one or more aspects of the invention;

FIGS. 2A and 3A illustrate top and bottom plan views, respectively, of an exemplary embodiment of a light guide member according to one or more aspects of the invention;

FIGS. 2B and 3B illustrate enlarged views of circled portions in FIGS. 2A and 3A, respectively;

FIG. 3C illustrates a partial cross-sectional view of the light guiding member illustrated in FIG. 3A, taken along line A1-A2 of FIG. 3B;

FIG. 3D illustrates a partial cross-sectional view of the light guiding member illustrated in FIG. 3A, taken along line B1-B2 of FIG. 3B;

FIG. 3E illustrates a partial cross-sectional view of the light guiding member illustrated in FIG. 3A, taken along line C1-C2 of FIG. 3B;

FIG. 4 illustrates a general diagram of an exemplary groove formed on the light guide member according to one or more aspects of the invention in relation to a light source unit; and

FIG. 5 illustrates a graph of the relationship between light and radiation angle of light.

### DETAILED DESCRIPTION OF THE INVENTION

The invention will now be described more fully hereinafter with reference to the accompanying drawings, in which exemplary embodiments of the invention are illustrated. The invention may, however, be embodied in different forms and should not be construed as limited to the embodiments set forth herein. Rather, these embodiments are provided so that this disclosure will be thorough and complete, and will fully convey the scope of the invention to those skilled in the art.

In the figures, the dimensions of layers and regions may be exaggerated for clarity of illustration. It will also be understood that when an element is referred to as being "on" another element, it can be directly on the other element, or intervening elements may also be present. Further, it will be understood that when an element is referred to as being "under" another element, it can be directly under, and one or more intervening elements may also be present. In addition, it will also be understood that when an element is referred to as being "between" two elements, it can be the only element between the two elements, or one or more intervening elements may also be present. Like reference numerals refer to like elements throughout. In the following description, references made to "first," "second," etc. merely serve to identify different elements and/or features of different elements and, unless specified otherwise, the features may or may not have the same values.

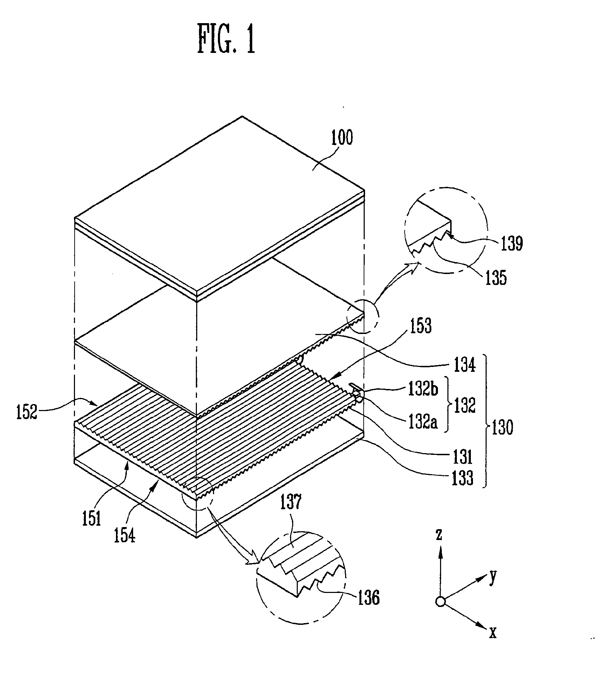

FIG. 1 illustrates an exploded perspective view of a liquid crystal display (LCD) device, as an exemplary device, employing an embodiment of a backlight and an embodiment of a light guiding member according to one or more aspects of the invention.

Referring to FIG. 1, an LCD device includes an LCD panel 100 and a BLU 130. The BLU 130 provides light to the LCD panel 100 such that images may be displayed on the LCD panel 100.

The LCD panel 100 includes two substrates disposed opposite each other, a liquid crystal layer provided between the two substrates, and a pixel region (not shown) defined by, e.g., a plurality of gate lines and data lines arranged on the substrates in, e.g., a matrix-type manner. A thin film transistor and a pixel electrode are formed at respective portions of one of the substrates corresponding to intersecting portions of the gate lines and data lines formed thereon (not shown). Each pixel electrode is connected to the respective thin film transistor, and each thin film transistor may control signals respectively supplied to the respective pixel(s). A color filter (not shown) and a common electrode (not shown) may be formed on the other of the substrates. A polarizing film (not shown) may be provided on an outer side of each of the substrates.

The BLU 130 includes a light guide member 131, a light source unit 132, an optical member 134, and a reflective member 133. The light source unit 132 supplies light to the light guide member 131. The light guide member 131 changes a distribution of light provided from the light source unit 132. The reflective member 133 reflects light received thereon back toward the LCD panel 100.

The optical member 134 collects and reflects the light having a uniform luminance distribution, which helps enhance brightness of the display device, and/or only allows light with a predetermined incident angle to pass through. For example, the optical member 134 may include a prism sheet that only allows substantially vertical direction, e.g., z-direction, light to pass through, while light having other incident angles may be reflected toward the reflective member 133 before being reflected back again toward the optical member 134, until the light vertically passes through the optical member 134 toward the LCD panel 100.

The light guide member 131 can change a distribution of light concentrated on a plurality of small areas thereof, and may thereby provide uniform light over a relatively larger area corresponding to, e.g., the plurality of small areas and/or an entire area of, e.g., the second side of the light guide member. The light guide member 131 may have a thin-plate-like shape, e.g., cuboid shape. The light guide member 131 may include, e.g., transparent resin such as, e.g., acryl or polycarbonate, etc.

The light guide member 131 includes a first side 151, a second side 152, a third side 153, and a fourth side 154. The first side 151 and the second side 152 oppose each other, and the third side 153 and the fourth side 154 oppose each other. More particularly, the third side 153 and the fourth side 154 extend between and connect respective portions of the first side 151 and the second side 152 together. The first side 151, e.g., reflective side, of the light guide member 131 face the reflective member 133 of the BLU 130, and the second side 152, e.g., exit side, of the light guide member 131 face the optical member 134.

In this embodiment, the light source unit 132 includes a number of light sources 132a disposed on one or more sides, e.g., the third side 153, of the light guide member 131 and a number of reflective panels 132b reflecting light radiated from the light source(s) 132a back toward the light guide member 131. A point light source, such as a light emitting diode (LED) light-emitting white light, may be used as the light source 132a, and one or more light sources may be arranged depending on a size of the light guide member 131. Furthermore, the number of reflective panels 132b can also depend on the site of the light guiding member. A BLU may employ, e.g., a cold cathode fluorescent lamp (CCFL) and/or an LED as a light source 132a. CCFLs may generally be employed in BLUs for larger-sized display devices, and LEDs may generally be employed in BLUs for smaller-sized display devices.

In the embodiment of the BLU illustrated, the light sources 132a are arranged on a single side, i.e., the third side 153, of the light guide member 131. That is, in some embodiments of the invention, the light guide member 131 may only receive light from one side, e.g., the third side 153 of the light guide member 131. However, embodiments of the invention are not limited to such an arrangement.

The optical member 134 in this embodiment includes a prism sheet. In some embodiments of the invention, the optical member 134 may only include a prism sheet. In other embodiments of the invention, the optical member 134 may include more than a single prism sheet, but not a diffusion sheet. Referring to FIG. 1, the optical member 134 includes one or more grooves 135 formed on a side 139 facing the light guide member 131. The prism sheet of the optical member 134 may help improve the vertical directionality of the light by diffusing and collecting light incident from the light guide member 131 in a vertical direction toward, e.g., the LCD panel 100.

The light guide member in this embodiment includes first grooves 136 and second grooves 137. The first grooves 136 extend along a first direction, e.g., x-direction, on the first side 151 of the light guide member 131. The first direction is substantially perpendicular to a zero-degree radiation angle of light emitted from the light source 132a of the BLU 130. The second grooves 137 extend along a second direction, e.g., y-direction, on the second side 152 of the light guide member 131. The second direction is substantially parallel to the zero-degree radiation angle of light emitted from the light source 132a of the BLU 130. The first grooves 136 and the second grooves 137 extend along directions that are substantially orthogonal to each other in this embodiment. However, embodiment of the invention are not limited to this arrangement. When light is provided to one or more sides, e.g., the third side 153, of the light guide member 131, an optical path and distribution of the received light may be changed by the first and second grooves 136, 137. In other embodiments, only the first or second grooves are provided.

The first grooves 136 and the second grooves 137 in this embodiment are substantially V grooves, though other embodiments may use different shapes. More particularly, in some embodiments of the invention, irrespective of a depth and/or a width of the first grooves 136 and/or the second grooves 137, a cross-sectional shape of the first grooves 136 and/or the second grooves 137 may be substantially V shaped, as taken, e.g., along a line extending along the second direction or the first direction, respectively. However, embodiments of the invention are not limited to such structures. For example, the first grooves 136 may be formed on the second side 152 of the light guide member 131, and the second grooves 137 may be formed on the first side 151 of the light guide member 131.

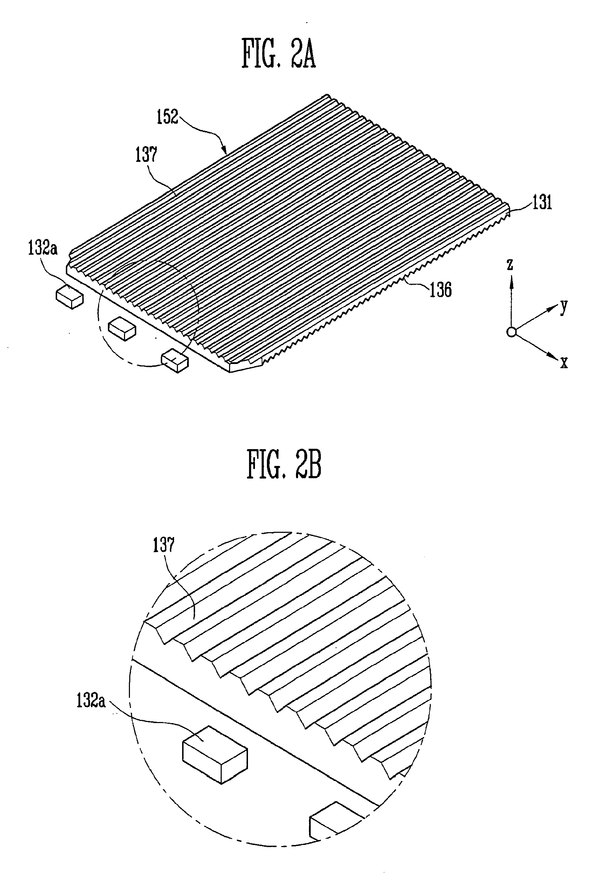

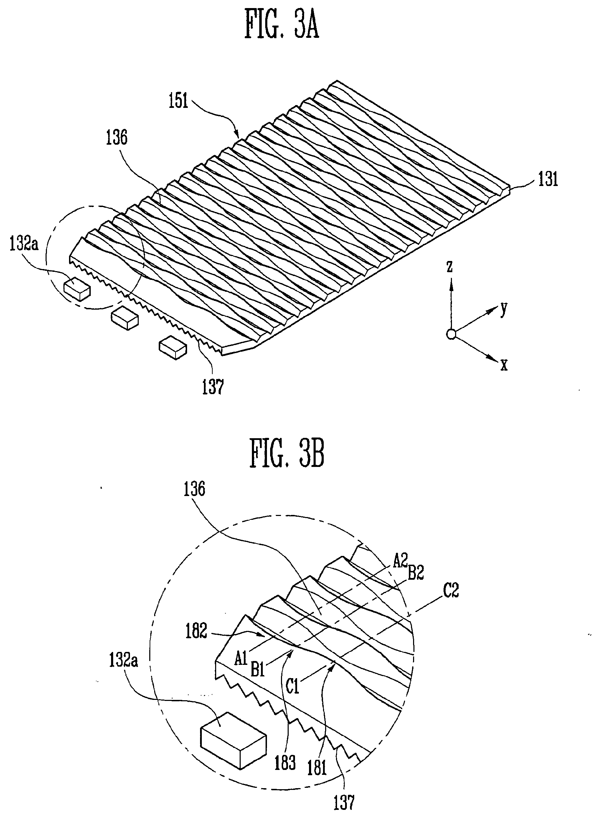

FIGS. 2A, 2B, 3A and 3B respectively illustrate plan views of first and second sides 151, 152 of an exemplary embodiment of a light guide member 131 according to one or more aspects of the invention. More particularly, FIGS. 2A and 2B illustrate exemplary second grooves 137, which are formed extending along the second direction on, e.g., the second side 152 of the light guide member 131, and FIGS. 3A and 3B illustrate exemplary first grooves 136, which are be formed extending along the first direction on, e.g., the first side 151 of the light guide member 131.

Referring to FIGS. 2A and 2B, the second grooves 137, which extend, e.g., along the second direction, may have constant or substantially constant widths and/or constant or substantially constant depths.

Referring to FIGS. 3A and 3B, the first grooves 136, which extend, e.g., along the first direction may have different widths and/or depths, i.e., non-constant widths and/or non-constant depths. In some embodiments of the invention, one, some, or all of the first grooves 136 can include a plurality of portions, e.g., a first portion 181, and a second portion 182, having different widths and/or depths. The first portion(s) 181 of the first grooves 136 may be directly or substantially aligned, along the second direction, with the light sources 132a and the second portion(s) 182 of the first grooves 136 may be between adjacent ones of the light sources 132a.

For example, for each of the first grooves 136, the first portion(s) 181 may have the smallest width and/or the smallest depth and the second portion(s) 182 may have the largest width and/or the largest depth, as illustrated in FIG. 3B. The width and/or the depth of third portion(s) 183 of the first groove(s) 136 between the first portion(s) 181 and the second portion(s) 182 may gradually change. More particularly, the width and/or the depth of the first groove(s) 136 may gradually decrease from the second portion 182 toward the adjacent first portion(s) 181.

In some embodiments of the invention, the first, second and third portions 181, 182, 183 of the first groove 136 may form a substantially wave pattern. Referring to FIG. 3A, in embodiments of the invention including more than one light source 132a, such a wave pattern may periodically repeat along the first direction corresponding to each of the light sources 132a. In some embodiments of the invention, how far light from the light source 132a must travel before being incident on a respective portion of a respective one of the first grooves 136 may be made substantially or completely equal as a result of, e.g., the first, second and third portions 181, 182, 183.

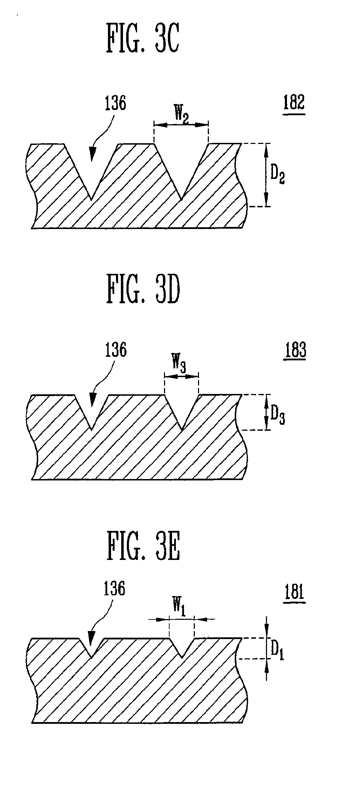

A more detailed description of the embodiment of the first grooves 136 of the light guide member 131 will be provided below with reference to FIGS. 3C-3E. More particularly, FIG. 3C illustrates a partial cross-sectional view of the light guiding member illustrated in FIG. 3A, taken along line A1-A2 of FIG. 3B, FIG. 3D illustrates a partial cross-sectional view of the light guiding member illustrated in FIG. 3A, taken along line B1-B2 of FIG. 3B, and FIG. 3E illustrates a partial cross-sectional view of the light guiding member illustrated in FIG. 3A, taken along line C1-C2 of FIG. 3B.

Referring to FIGS. 3C-3E, the first portion 181 of the first grooves 136 has a first width W₁ and/or a first depth D₁, the second portion 182 of the first grooves 136 has a second width W₂ and/or a second depth D₂, and the third portion 183 of the first grooves 136 has a third width W₃ and/or a third depth D₃.

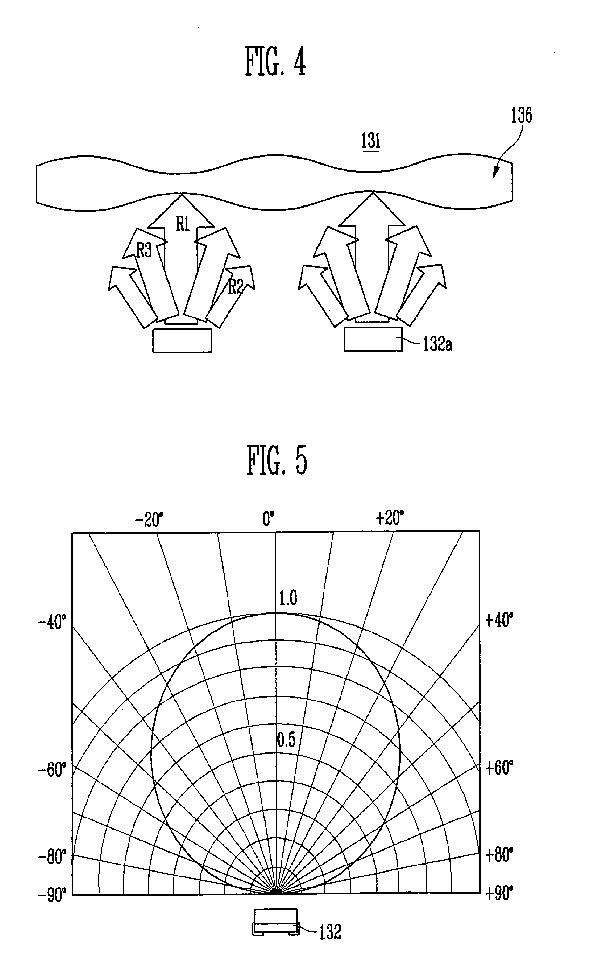

FIG. 4 illustrates a general diagram of an exemplary groove formed on the light guide member according to an embodiment of the invention in relation to light sources 132a. As illustrated in FIG. 4, in some embodiments of the invention, one or both opposing sides of the first groove 136 may have a substantially wave pattern, when viewed from a point above or below the first groove 136. Further, in some embodiments of the invention, the substantially wave pattern may repeat based on, e.g., a number of the light sources 132a and/or a type of the light sources 132a, etc, as shown, e.g., in FIG. 3A.

Referring to FIG. 4, a size of each arrow, corresponding to the light being emitted from the light source 132a, may correspond to an intensity of the light being emitted at that respective radiation angle. As discussed above, the width and/or depth (not illustrated) of the respective portions of the first groove 136 may be different based on, e.g., a size of the light guide member 131, a type of the light source 132a, a distance and/or position of the respective portion, e.g., 181, 182, 183, of the first groove 136 relative to the light source 132a and/or the radiation angle of light radiated from the light source 132a.

The first portion 181 may receive light radiating along a first radiation angle R1 of 0°. The second portion 182 may receive light radiating at a second radiation angle R2, which may be greater than 0°. The third portion 183 may receive light radiating at a third radiation angle R3, which may be less than R2 and greater than R1. That is, in some embodiments of the invention, the first radiation angle R1 associated with the first portion 181 may be smaller than the second radiation angle R2 associated with the second portion 182 and the third radiation angle R3 associated with the third portion 183, and the second radiation angle R2 may be larger than the third radiation angle R3.

As discussed above, in some embodiments of the invention, the first width W₁ may be smaller than the second width W₂ and the third width W₃, and the third width W₃ may be smaller than the second width W₂. That is, as the radiation angle increases, e.g., from R1 to R2, the width and/or depth of the first groove 136 may be increased linearly, such that first width W₁ and/or the first depth D₁ of the first portion 181 of the first groove aligned with the respective light source 132a along the second direction may be smaller than the second width W₂ and/or second depth D₂ of the second portion of the first groove between adjacent ones the light sources 132a.

In the above description of some embodiments of the invention, reference is only made to first, second and third portions 181, 182, 183, first, second and third radiation angles R1, R2, R3, first, second and third widths W₁, W₂, W₃, and first, second and third depths D₁, D₂, D₃. However, embodiments of the invention are not limited to three portions, three angles, three widths and/or three depths, and may involve less than three or more than three.

In some embodiments of the invention, the width, e.g., W₁, W₂, W₃, and/or the depth, e.g., D₁, D₂, D₃, of the first groove(s) 136 may be controlled in accordance with a size of the light guide member 131 and/or a type of the light source unit 132, etc.

FIG. 5 illustrates a graph of the relationship between light and radiation angle of light. As illustrated in FIG. 5, the intensity of light is reduced as the radiation angle of the light increases. Assuming that the intensity of light emitted along a zero-degree radiation angle, i.e., 0°, toward the first portion 181 of the first groove 136 aligned with the light source unit 132 along the second direction is 100%, the intensity of light may be reduced as the radiation angle increases according to, e.g., the relationship shown in the graph illustrated in FIG. 5. Using the relationship shown in the graph illustrated in FIG. 5, a width and/or a depth of at least a portion(s) of the first groove(s) 136 may be controlled. Table 1 below shows a relationship between radiation angle (°), intensity of light (%), the width of the first groove 136, and the depth of the first groove 136.

**Table 1**

| | | | | | | | |
|---|---|---|---|---|---|---|---|
| Angle (°) | -60 | -40 | -20 | 0 | 20 | 40 | 60 |
| Intensity of light (%) | 50 | 75 | 95 | 100 | 95 | 75 | 50 |
| Width (µm) | 30 | 25 | 21 | 20 | 21 | 25 | 30 |
| Depth (µm) | 1.5 | 1.25 | 1.05 | 1 | 1.05 | 1.25 | 1.5 |

Referring to Table 1, as the radiation angle increases, the depth and width of the first groove(s) 136 increase in accordance with a rate at which the intensity of the light decreases.

Although the embodiments illustrated in the accompanying Figures illustrate the first grooves 136 extending along the first direction, e.g., x-direction, on the third first side 153 of the light guide member 131, embodiments of the invention are not limited to such a structure. The first grooves 136 may be formed on the second side 152 of the light guide member 131. For example, the first grooves 136 may extend along the first direction, e.g., x-direction, on the second side 152 of the light guide member 131.

Also, although the embodiment illustrated in FIGS. 3A-3E illustrate a change in the width and the depth of the first groove 136, embodiments of the invention are not limited to such structures. For example, in some embodiments of the invention, only the width or the depth of the first groove 136 may change according to, e.g., a size of the light guide member, a type of light source 132a, etc. In some embodiments of the invention, only a portion of the first groove 136 may have changing widths and/or depths while other portions of the first groove 136 may have substantially constant widths and/or depths.

An exemplary operation of the light guide member 131 is described below with reference to FIG. 1. Light may be emitted from the light source unit 132 toward the light guide member 131. For example, the light from the light source unit 132 may be emitted toward the first side 151 of the light guide member 131. The light from the light source unit 132 may then be guided and provided to the LCD panel 100 via the light guide member 131 employing one or more embodiments of the invention.

The light radiated from the light source 132a may be incident into the inside of the light guide member 131 via an incidence face, e.g., third side 153, on one side of the light guide member 131. The light radiated from the light source 132a may be incident at an intensity that depends on the radiation angle of the light. In some embodiments of the invention, the degree of the light scattering may be varied by providing the first groove(s) 136 having different width(s) and/or depth(s) so as to enable the intensity of light collected at respective portions of the light guide member to be uniform.

In some embodiments of the invention, at a portion(s) of the light guide member 131 aligned with, e.g., directly overlapping, a portion of the light source 132a along the second direction and/or arranged along the zero-degree radiation angle, the intensity of light emitted thereon may be maximum, and thus, a width and/or a depth of the first grooves 136 may be relatively small and, in some embodiments of the invention, smaller than any other portion(s) of the respective first groove 136.

Similarly, in some embodiments of the invention, at a portion(s) of the light guide member 131 arranged substantially between adjacent ones of the light sources 132a and/or arranged along relatively larger radiation angle(s), the intensity of light emitted thereon may be smaller or a minimum, and thus, a width and/or depth of the first groove(s) 136 may be relatively large, and, in some embodiments of the invention, larger than any other portion(s) of the respective first groove 136. By forming the first groove(s) 136 to include portions having different widths(s) and/or different depth(s), e.g., gradually changing, e.g., having a wave pattern width and/or gradually changing or wave pattern depth, the intensity of the light collected at respective portions about the light guide member 131 may be completely or substantially uniform.

A portion of light incident on the light guide member 131 may be emitted to, e.g., the second side 152 of the light guide member 131 by the first or second grooves 136, 137, and other portion(s) of the incident light may progress inside of the light guide member 131 to be further guided before being output from the second side 152 of the light guide member. An outgoing angle of the light exiting the light guide member 131 may be guided by, e.g., the first and/or the second grooves 136, 137, so that the light may be collected, provided and/or guided in a constant and/or substantially constant direction, and may have a substantially uniform and/or completely uniform luminance distribution.

Other portions of the incident light may be emitted toward the first side 151 of the light guide member 131, and may exit from, e.g., the first side 151 of the light guide member 131 before being reflected by, e.g., the reflective member 133 and directed back toward the light guide member 131. The light reflected by the reflective member 133 may then exit the second side 152 of the light guide member 131, while maintaining the uniform and/or substantially uniform luminance distribution and the constant and/or substantially constant direction of the exiting light. The light uniformly and/or substantially uniformly distributed in the constant and/or substantially constant direction may be emitted from, e.g., the second side 152 of the light guide member 131 to the prism sheet of the optical member 134. The light may then be uniformly emitted along a third direction, e.g., z direction, to a surface, e.g., entire surface, of the LCD panel 100 via, e.g., the groove(s) 135 of the prism sheet of the optical member 134.

In some embodiments of the invention, a first groove(s) having a width and/or a depth that changes in accordance with a radiation angle of light radiated from a light source may be provided on one side of a light guide member. Embodiments of the invention provide a light guide member including a first groove(s) having different light scattering characteristics such that an intensity and/or a distribution of light may be uniform and bright-line generation may be reduced and/or prevented. Embodiments of the invention provide a light guide member including a first groove(s) including a portion having a different width and/or a different depth according to a radiation angle of light incident thereon so as to provide light having a uniform luminance distribution and/or relatively high brightness. Embodiments of the invention provide a BLU employing a light guide member having a different width and/or a different depth according to a radiation angle of light that may be incident thereon so as to provide light having a uniform luminance distribution and relatively high brightness to, e.g., a display panel of a display device, thereby improving image quality and/or visibility.

Although exemplary embodiments of the light guide member and the backlight unit may be described in relation to an exemplary LCD device, embodiments of the invention are not limited to use with an LCD device. Further, although reference is made to a "backlight unit" as an exemplary illumination device, such units are generally called "backlight" units because they may be arranged behind the display panel. However, aspects of the invention are not limited to such arrangements and/or uses.

Exemplary embodiments of the invention have been disclosed herein, and although specific terms are employed, they are used and are to be interpreted in a generic and descriptive sense only and not for purpose of limitation. For example, while V-grooves have been illustrated in some embodiments of the invention, an angle formed between the light and the wave pattern may be more important than the shape of the groove itself. While a V-groove may be the most efficient manner to realize the appropriate wave pattern, the groove may, e.g., be curved or have a flat base, rather a V shape. Accordingly, it will be understood by those of ordinary skill in the art that various changes in form and details may be made without departing from the scope of the invention as set forth in the following claims.

## Claims

1. A light guide apparatus, comprising:
a light guide member (131)
a plurality of light sources (132) arranged adjacent to light guide member (131), wherein the light guide member (131) is arranged to guide light incident thereon from the plurality of light sources (132), the light guide member (131) comprising:
a plurality of first grooves (136) on a first side (151) of the light guide member (131) for receiving radiated light, wherein each first groove (136) comprises a plurality of first portions (181) and a plurality of second portions (182, 183), wherein at least one of a first width (W₁) and a first depth (D₁) of a said first portion (181) of the first groove (136) is different from a second width (W₂, W₃) and a second depth (D₂, D₃) of a said second portion (182, 183), **characterized in that**
each said first portion (181) is a portion of the light guide member (131) arranged to receive light from a said light source (132) substantially along a zero-degree radiation angle (R1) and each said second portion (182, 183) is a portion of the light guide member (131) arranged to receive light at a radiation angle (R2, R3) greater than zero degrees,
the plurality of first portions (181) and the plurality of second portions (182, 183) are arranged in an alternating pattern along each first groove (136),
each first groove (136) is arranged to extend along a direction substantially orthogonal to the zero-degree radiation angle (R1) of the light, and
at least one of the first width (W₁) and the first depth (D₁) is smaller than the second width (W₂, W₃) and the second depth (D₂, D₃), respectively.

2. A light guide apparatus according to claim 1, wherein the difference between the first width (W₁) and/or depth (D₁) and the second width (W₂, W₃) and/or depth (D₂, D₃) is related linearly to a respective radiation angle of the light illuminating the first portion (181) and the second portion (182, 183) of the light guide member (131).

3. A light guide apparatus according to claim 1 or 2, wherein the second portion (182, 183) is further from the light source (132) illuminating light thereon than the first portion (181).

4. A light guide apparatus according to any one of claims 1 to 3, wherein each first groove (136) has a substantially V-like cross-sectional shape, taken along a direction crossing a direction along which the first groove (136) extends.

5. A light guide apparatus according to any one of claims 1 to 4, wherein the first portion (181) has a smaller width (W₁) and a smaller depth (D₁) than the second portion (182, 183).

6. A light guide apparatus according to claim 5, wherein the width of each first groove (136) gradually decreases from the second width (W₂, W₃) at the second portion (182, 183) to the first width (W₁) at the first portion (181).

7. A light guide apparatus according to claim 5 or 6, wherein the depth of each first groove (136) gradually decreases from the second depth (D₂, D₃) at the second portion (182, 183) to the first depth (D₁) at the first portion (181).

8. A light guide apparatus according to any one of claims 5 to 7, wherein each first groove (136) includes sides having a substantially wave-like shape.

9. A light guide apparatus according to any one of claims 1 to 8, further comprising a second groove (137) on a second side (152) of the light guide member (131), the second side (152) opposing the first side (151), and the second groove (137) extending along a direction that crosses a direction along which the first groove (136) extends.

10. A light guide apparatus according to claim 9, wherein the second groove (137) has at least one of a substantially constant width and a substantially constant depth.

11. A backlight unit, BLU, employable by a display device including a display panel (100), the backlight unit comprising:
an optical member (134); and
a light guide apparatus according to any one of claims 1 to 10;
wherein the light guide member (131) is arranged to guide and provide the light received from the light sources (132) toward the optical member (134) and the optical member (134) is arranged to provide the light provided by the light guide member (131) to the display panel (100) of the display device.

12. A BLU according to claim 11, wherein the light sources (132) include at least one of a cold cathode fluorescent tube and a LED.

13. A BLU according to claim 11 or 12, wherein the optical member (134) includes a prism sheet.

14. A backlight unit according to any one of claims 11 to 13, wherein the optical member (134) does not include a diffusion sheet.

## Patentansprüche

1. Lichtleitervorrichtung, Folgendes umfassend:
ein Lichtleiterglied (131),
eine Vielzahl von Lichtquellen (132), dem Lichtleiterglied (131) benachbart angeordnet, worin das Lichtleiterglied (131) dazu angeordnet ist, von der Vielzahl von Lichtquellen (132) darauf einfallendes Licht zu leiten, wobei das Lichtleiterglied (131) Folgendes umfasst:
eine Vielzahl von ersten Rillen (136) auf einer ersten Seite (151) des Lichtleiterglieds (131) zum Empfangen von ausgestrahltem Licht, worin jede erste Rille (136) eine Vielzahl von ersten Teilen (181) und eine Vielzahl von zweiten Teilen (182, 183) umfasst, worin mindestens eine einer ersten Breite (W₁) und einer ersten Tiefe (D₁) eines solchen ersten Teils (181) der ersten Rille (136) von einer zweiten Breite (W₂, W₃) und einer zweiten Tiefe (D₂, D₃) eines solchen zweiten Teils (182, 183) verschieden ist, **dadurch gekennzeichnet, dass**
jeder erste Teil (181) ein Teil eines Lichtleiterglieds (131) ist, dazu angeordnet, Licht von einer solchen Lichtquelle (132) im Wesentlichen entlang eines Null-Grad-Ausstrahlwinkels (R1) zu empfangen, und jeder zweite Teil (182, 183) ein Teil des Lichtleiterglieds (131) ist, dazu angeordnet, Licht unter einem Ausstrahlwinkel (R2, R3) größer als null Grad zu empfangen,
die Vielzahl von ersten Teilen (181) und die Vielzahl von zweiten Teilen (182, 183) in einem alternierenden Muster entlang jeder ersten Rille (136) angeordnet sind,
jede erste Rille (136) dazu angeordnet ist, entlang einer Richtung zu verlaufen, die im Wesentlichen senkrecht zum Null-Grad-Ausstrahlwinkel (R1) des Lichts ist, und
mindestens eine der ersten Breite (W₁) und der ersten Tiefe (D₁) kleiner ist als die zweite Breite (W₂, W₃) bzw. die zweite Tiefe (D₂, D₃).

2. Lichtleitervorrichtung nach Anspruch 1, worin die Differenz zwischen der ersten Breite (W₁) und/oder Tiefe (D₁) und der zweiten Breite (W₂,W₃) und/oder Tiefe (D₂, D₃) in einem linearen Verhältnis zu einem jeweiligen Ausstrahlwinkel des Lichts steht, das den ersten Teil (181) und den zweiten Teil (182, 183) des Lichtleiterglieds (131) beleuchtet.

3. Lichtleitervorrichtung nach Anspruch 1 oder 2, worin der zweite Teil (182, 183) von der ihn beleuchtenden Lichtquelle (132) weiter entfernt ist als der erste Teil (181).

4. Lichtleitervorrichtung nach einem der Ansprüche 1 bis 3, worin jede erste Rille (136) eine im Wesentlichen V-förmige Querschnittsform hat, entlang einer Richtung genommen, die eine Richtung kreuzt, entlang der die erste Rille (136) verläuft.

5. Lichtleitervorrichtung nach einem der Ansprüche 1 bis 4, worin der erste Teil (181) eine kleinere Breite (W₁) und eine kleinere Tiefe (D₁) hat als der zweite Teil (182, 183).

6. Lichtleitervorrichtung nach Anspruch 5, worin die Breite jeder ersten Rille (136) von der zweiten Breite (W₂, W₃) am zweiten Teil (182, 183) zur ersten Breite (W₁) am ersten Teil (181) graduell abnimmt.

7. Lichtleitervonnichtung nach Anspruch 5 oder 6, worin die Tiefe jeder ersten Rille (136) von der zweiten Tiefe (D₂, D₃) am zweiten Teil (182, 183) zur ersten Tiefe (D₁) am ersten Teil (181) graduell abnimmt.

8. Lichtleitervorrichtung nach einem der Ansprüche 5 bis 7, worin jede erste Rille (136) Seiten mit einer im Wesentlichen wellenartigen Form einschließt.

9. Lichtleitervorrichtung nach einem der Ansprüche 1 bis 8, außerdem eine zweite Rille (137) auf einer zweiten Seite (152) des Lichtleiterglieds (131) umfassend, wobei die zweite Seite (152) der ersten Seite (151) entgegengesetzt ist und die zweite Rille (137) entlang einer Richtung verläuft, die eine Richtung kreuzt, entlang der die erste Rille (136) verläuft.

10. Lichtleitervorrichtung nach Anspruch 9, worin die zweite Rille (137) mindestens eine einer im Wesentlichen konstanten Breite und einer im Wesentlichen konstanten Tiefe hat.

11. Rückbeleuchtungseinheit, BLU, durch eine Anzeigeeinrichtung einsetzbar, die eine Anzeigetafel (100) einschließt, wobei die Rückbeleuchtungseinheit umfasst:
ein optisches Glied (134); und
eine Lichtleitervorrichtung nach einem der Ansprüche 1 bis 10;
worin das Lichtleiterglied (131) dazu angeordnet ist, das von den Lichtquellen (132) empfangene Licht zum optischen Glied (134) zu leiten und ihm bereitzustellen, und das optische Glied (134) dazu angeordnet ist, das vom Lichtleiterglied (131) bereitgestellte Licht der Anzeigetafel (100) der Anzeigeeinrichtung bereitzustellen.

12. BLU nach Anspruch 11, worin die Lichtquellen (132) mindestens eine von Folgenden einschließt: eine fluoreszierende Kaltkathodenröhre und eine Leuchtdiode.

13. BLU nach Anspruch 11 oder 12, worin das optische Glied (134) ein Prismenblatt einschließt.

14. BLU nach einem der Ansprüche 11 bis 13, worin das optische Glied (134) kein Diffusionsblatt einschließt.

## Revendications

1. Appareil de guidage de lumière, comprenant :
un élément de guidage de lumière (131),
une pluralité de sources de lumière (132) agencées de manière adjacente à l'élément de guidage de lumière (131), dans lequel l'élément de guidage de lumière (131) est agencé pour guider la lumière frappant celui-ci provenant de la pluralité de sources de lumière (132), l'élément de guidage de lumière (131) comprenant :
une pluralité de premières rainures (136) sur un premier côté (151) de l'élément de guidage de lumière (131) pour recevoir une lumière rayonnée, dans lequel chaque première rainure (136) comprend une pluralité de premières parties (181) et une pluralité de deuxièmes parties (182, 183), dans lequel au moins l'une d'une première largeur (W₁) et d'une première profondeur (D₁) d'une dite première partie (181) de la première rainure (136) est différente d'une deuxième largeur (W₂, W₃) et d'une deuxième profondeur (D₂, D₃) d'une dite deuxième partie (182, 183), **caractérisé en ce que**
chaque dite première partie (181) est une partie de l'élément de guidage de lumière (131) agencée pour recevoir une lumière provenant d'une dite source de lumière (132) sensiblement le long d'un angle de rayonnement de zéro degré (R1) et chaque dite deuxième partie (182, 183) est une partie de l'élément de guidage de lumière (131) agencée pour recevoir une lumière selon un angle de rayonnement (R2, R3) supérieur à zéro degré,
la pluralité de premières parties (181) et la pluralité de deuxièmes parties (182, 183) sont agencées en un motif alterné le long de chaque première rainure (136),
chaque première rainure (136) est agencée pour s'étendre le long d'une direction sensiblement orthogonale à l'angle de rayonnement de zéro degré (R1) de la lumière, et
au moins l'une de la première largeur (W₁) et de la première profondeur (D₁) est inférieure à la deuxième largeur (W₂, W₃) et à la deuxième profondeur (D₂, D₃), respectivement.

2. Appareil de guidage de lumière selon la revendication 1, dans lequel la différence entre la première largeur (W₁) et/ou profondeur (D₁) et la deuxième largeur (W₂, W₃) et/ou profondeur (D₂, D₃) est associée linéairement à un angle de rayonnement respectif de la lumière éclairant la première partie (181) et la deuxième partie (182, 183) de l'élément de guidage de lumière (131).

3. Appareil de guidage de lumière selon la revendication 1 ou 2, dans lequel la deuxième partie (182, 183) est plus éloignée de la source de lumière (132) rayonnant la lumière sur celle-ci que la première partie (181).

4. Appareil de guidage de lumière selon l'une quelconque des revendications 1 à 3, dans lequel chaque première rainure (136) a une forme en coupe sensiblement similaire à un V, prise le long d'une direction croisant une direction le long de laquelle la première rainure (136) s'étend.

5. Appareil de guidage de lumière selon l'une quelconque des revendications 1 à 4, dans lequel la première partie (181) a une plus petite largeur (W₁) et une plus petite profondeur (D₁) que la deuxième partie (182, 183).

6. Appareil de guidage de lumière selon la revendication 5, dans lequel la largeur de chaque première rainure (136) diminue graduellement de la deuxième largeur (W₂, W₃) au niveau de la deuxième partie (182, 183) à la première largeur (W₁) au niveau de la première partie (181).

7. Appareil de guidage de lumière selon la revendication 5 ou 6, dans lequel la profondeur de chaque première rainure (136) diminue graduellement de la deuxième profondeur (D₂, D₃) au niveau de la deuxième partie (182, 183) à la première profondeur (D₁) au niveau de la première partie (181).

8. Appareil de guidage de lumière selon l'une quelconque des revendications 5 à 7, dans lequel chaque première rainure (136) comprend des côtés ayant une forme sensiblement ondulée.

9. Appareil de guidage de lumière selon l'une quelconque des revendications 1 à 8, comprenant en outre une deuxième rainure (137) sur un deuxième côté (152) de l'élément de guidage de lumière (131), le deuxième côté (152) étant opposé au premier côté (151), et la deuxième rainure (137) s'étendant le long d'une direction qui croise une direction le long de laquelle la première rainure (136) s'étend.

10. Appareil de guidage de lumière selon la revendication 9, dans lequel la deuxième rainure (137) a au moins l'une d'une largeur sensiblement constante et d'une profondeur sensiblement constante.

11. Unité de rétroéclairage, BLU, utilisable par un dispositif d'affichage comprenant un panneau d'affichage (100), l'unité de rétroéclairage comprenant :
un élément optique (134) ; et
un appareil de guidage de lumière selon l'une quelconque des revendications 1 à 10;
dans laquelle l'élément de guidage de lumière (131) est agencé pour guider et fournir la lumière reçue des sources de lumière (132) à l'élément optique (134) et l'élément optique (134) est agencé pour fournir la lumière fournie par l'élément de guidage de lumière (131) au panneau d'affichage (100) du dispositif d'affichage.

12. BLU selon la revendication 11, dans laquelle les sources de lumière (132) comprennent au moins l'un d'un tube fluorescent à cathode froide et d'une DEL.

13. BLU selon la revendication 11 ou 12, dans laquelle l'élément optique (134) comprend une feuille à prismes.

14. Unité de rétroéclairage selon l'une quelconque des revendications 11 à 13, dans laquelle l'élément optique (134) ne comprend pas de feuille de diffusion
